(19) Europäisches Patentamt
European Patent Office
Office européen des brevets

(11) EP 4 371 662 B1

(12) # EUROPEAN PATENT SPECIFICATION

(45) Date of publication and mention of the grant of the patent:
**31.12.2025 Bulletin 2026/01**

(21) Application number: **22841961.0**

(22) Date of filing: **30.06.2022**

(51) International Patent Classification (IPC):
***G01N 30/88*** *(2006.01)* ***G01N 30/26*** *(2006.01)*
***B01J 20/287*** *(2006.01)* *G01N 30/74 (2006.01)*
*G01N 30/34 (2006.01)*

(52) Cooperative Patent Classification (CPC):
**G01N 30/88; B01J 20/287;** G01N 30/34;
G01N 30/74; G01N 2030/884

(86) International application number:
**PCT/JP2022/026213**

(87) International publication number:
**WO 2023/286617 (19.01.2023 Gazette 2023/03)**

(54) **METHOD FOR ANALYZING REACTIVE LOW-MOLECULAR-WEIGHT COMPOUND CONTAINED IN POLYOXYETHYLENE DERIVATIVE**

VERFAHREN ZUR ANALYSE EINER REAKTIVEN NIEDERMOLEKULAREN VERBINDUNG IN EINEM POLYOXYETHYLENDERIVAT

PROCÉDÉ D’ANALYSE D’UN COMPOSÉ RÉACTIF DE FAIBLE POIDS MOLÉCULAIRE CONTENU DANS UN DÉRIVÉ DE POLYOXYÉTHYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.07.2021 JP 2021115693**

(43) Date of publication of application:
**22.05.2024 Bulletin 2024/21**

(73) Proprietor: **NOF Corporation**
**Shibuya-ku**
**Tokyo 150-6019 (JP)**

(72) Inventors:
- **KAMIYA, Masaki**
**Kawasaki-shi, Kanagawa 210-0865 (JP)**
- **SUZUKI, Akira**
**Kawasaki-shi, Kanagawa 210-0865 (JP)**
- **YOSHIOKA, Hiroki**
**Kawasaki-shi, Kanagawa 210-0865 (JP)**

(74) Representative: **J A Kemp LLP**
**80 Turnmill Street**
**London EC1M 5QU (GB)**

(56) References cited:
**WO-A1-2010/107520 JP-A- 2005 208 050**
**JP-A- 2018 172 649**

- **PASUT G ET AL: "New active poly(ethylene glycol) derivative for amino coupling", REACTIVE AND FUNCTIONAL POLYMERS, ELSEVIER, AMSTERDAM, NL, vol. 67, no. 6, 1 June 2007 (2007-06-01), pages 529 - 539, XP025318425, ISSN: 1381-5148, [retrieved on 20070525], DOI: 10.1016/J.REACTFUNCTPOLYM.2007.03.005**
- **WILCHEK MEIR, MIRON TALIA: "Limitations of A-Hydroxysuccinimide Esters in Affinity Chromatography and Protein Immobilization1’", BIOCHEMISTRY, vol. 26, no. 141, 1 January 1987 (1987-01-01), pages 2155 - 2161, XP093023921, ISSN: 0006-2960**
- **GROSS H., BILK L.: "Zur reaktion von N-Hydroxysuccinimid mit dicyclohexylcarbodiimid", TETRAHEDRON, ELSEVIER SIENCE PUBLISHERS, AMSTERDAM, NL, vol. 24, no. 24, 1 January 1968 (1968-01-01), AMSTERDAM, NL , pages 6935 - 6939, XP093023922, ISSN: 0040-4020, DOI: 10.1016/S0040-4020(01)96807-3**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 371 662 B1

## Description

[Technical Field]

The present invention relates to a highly sensitive analysis method for a low-molecular-weight compound contained in a polyoxyethylene derivative. More particularly, it relates to a highly sensitive method for analyzing a low-molecular-weight compound contained in a polyoxyethylene derivative having an active group at an end, which is used as a polyoxyethylene modifying agent for polypeptide, physiologically active protein, enzyme, and the like.

[Background Art]

In recent years, polymer compounds aiming at use for pharmaceutical products have been actively developed, and polyoxyethylene derivatives activated at the end thereof are one of them. The main use thereof is to make it possible to extend the half-life in blood of a biologically related substance, such as hormones, cytokines, antibodies, and enzymes, through an increase in the molecular weight and formation of a hydration layer by chemically modifying the biologically related substance. In addition, by modifying with polyoxyethylene derivatives, effects such as reduction of the toxicity and antigenicity of biologically related substances, improved solubility of poorly water-soluble drugs, and the like can be obtained. The effect of reducing the toxicity and antigenicity of biologically related substances varies depending on the molecular weight of the polyoxyethylene derivative used for modification and the amount of modification. For example, in the case of a highly antigenic biologically related substance, the antigenicity of the biologically related substance can be reduced by modifying with many polyoxyethylene derivatives.

The structure of polyoxyethylene derivatives generally has an active group at the end of polyoxyethylene that can chemically bind to functional groups such as amino group, mercapto group, carboxyl group, and unsaturated bond that exist on the surface of biologically related substances such as proteins and the like to be modified. For example, active groups for modifying amino groups of biologically related substances include formyl group, acetal group, paranitrophenyloxycarbonyl group, N-succinimidyloxycarbonyl group, and the like. In particular, N-succinimidyloxycarbonyl groups react under mild conditions, and comparatively many amino groups that can react with N-succinimidyloxycarbonyl groups are present on the surface of biologically related substances. Therefore, they are useful active groups for chemical modification of biologically related substances (Non Patent Literature 1).

A polyoxyethylene derivative having an N-succinimidyloxycarbonyl group can be synthesized by reacting a polyoxyethylene derivative having a carboxylic acid at the end with N-hydroxysuccinimide in the presence of a condensing agent such as dicyclohexylcarbodiimide and the like. In addition, it is known that side reactions occur between reagents during condensation reaction, and a reactive low-molecular-weight compound represented by the formula (1)

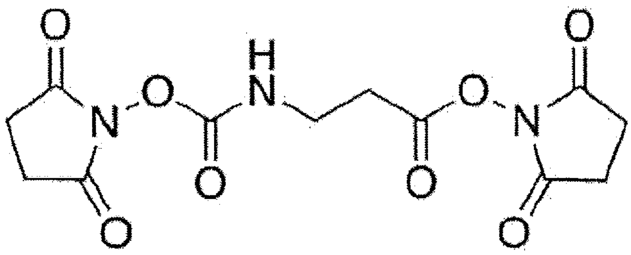

(1)

(N-succinimidyloxycarbonyl-β-alanine N-succinimidyl ester, β-Ala-NHS, CAS registration number: 21994-89-8) is generated as an impurity (Non Patent Literatures 2, 3). Commercially available polyoxyethylene derivatives having an N-succinimidyloxycarbonyl group contain about 100 to 1000 ppm of a compound of the formula (1).

The compound of the formula (1) has an N-succinimidyloxycarbonylamino group and an N-succinimidyloxycarbonyl group at both ends, and these functional groups have reactivity with an amino group, due to which application of the compound as a bifunctional linker has also been proposed (Patent Literature 1, Non Patent Literature 3). However, when the compound of the formula (1) is included in polyoxyethylene derivatives and biologically related substances such as protein and the like are chemically modified, the compound of the formula (1) reacts with the biologically related substances like polyoxyethylene derivatives and generates impurities in preparations. Therefore, highly sensitive analysis is required to control the content of the compound of formula (1), which is contained in small amounts in polyoxyethylene derivatives.

A method using liquid chromatography is a general method for analyzing low-molecular-weight impurities such as the compound of the formula (1), and a method for highly sensitive detection includes ultraviolet visible spectrometer detector, fluorescence detector, mass spectrometry detector, and the like. However, no analysis method has been reported so far to detect the compound of the formula (1) with high sensitivity using these detectors.

As described above, the compound of the formula (1), which is produced as a by-product during the synthesis of polyoxyethylene derivatives having an N-succinimidyloxycarbonyl group at the end, reacts even in small amounts with biologically related substances and causes by-production of impurities. Therefore, from the viewpoint of quality control of pharmaceutical products, it is required to analyze the compound of the formula (1) contained in polyoxyethylene derivatives with high sensitivity.

[Citation List]

[Patent Literature]

[Patent Literature 1]
WO 2010/107520
[Patent Literature 2]
WO 1997/003106

[Non Patent Literature]

[Non Patent Literature 1]
Bioconjugate Techniques 3rd edition, 2013
[Non Patent Literature 2]
Tetrahedron 1968, 24, 6935-6939
[Non Patent Literature 3]
Reactive & Functional Polymers 2007, 67, 529-539

[Summary of Invention]

[Technical Problem]

Accordingly, the problem to be solved by the present invention is provision of a method capable of highly sensitively analyzing a compound of the formula (1):

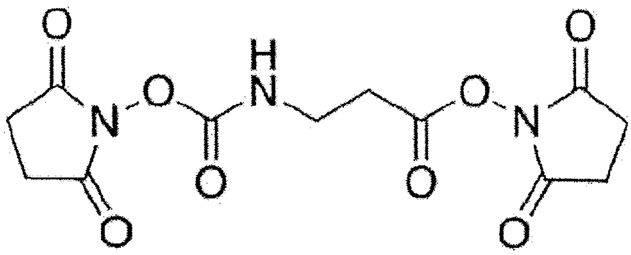

(1)

contained in polyoxyethylene derivatives.

[Solution to Problem]

The present invention is characterized in that it is a method including analyzing by reversed-phase liquid chromatography a polyoxyethylene derivative having an N-succinimidyloxycarbonyl group at the end that chemically binds to biologically related substances, and highly sensitively analyzing the compound of the formula (1) which is contained in an extremely small amount from the area value of the chromatogram obtained with an ultraviolet visible spectrometer detector.
That is, the present invention relates to the following (1) and (2).

(1) An analysis method comprising separating a compound of the formula (1):

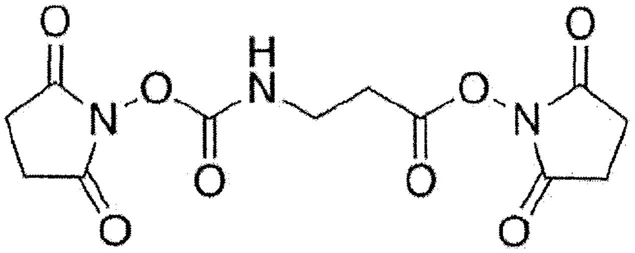

(1)

contained in a polyoxyethylene derivative by reversed-phase chromatography, and detecting the compound with an ultraviolet visible spectrometer detector, wherein ultraviolet light with a wavelength shorter than 200 nm as the detection wavelength is used, and an acidic substance with a maximum molar absorption coefficient of not more than 20 $M^{-1}cm^{-1}$ at 190 to 200 nm and a pKa of not more than 4 is used as an additive to the mobile phase for the analysis.

(2) The analysis method of the above-mentioned (1), wherein the polyoxyethylene derivative is represented by the formula (2):

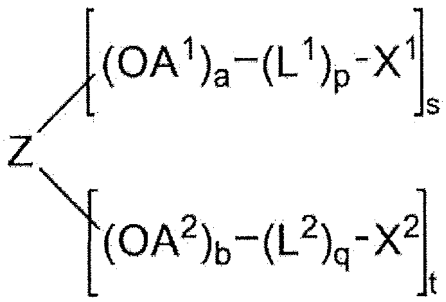

(2)

wherein Z is a residue of a compound having 2 to 8 hydroxyl groups and 2 to 21 carbon atoms and optionally containing an oxygen atom and/or a nitrogen atom, $OA^1$ and $OA^2$ are oxyethylene groups, a and b are each independently 0 to 5,000 and a+b is not less than 20, $L^1$ and $L^2$ are each independently an alkylene group optionally having a bond selected from an ester bond, an urethane bond, an amide bond, a urea bond, an ether bond, and a thioether bond in an alkylene chain or at an end, p and q are each independently 0 or 1, s is 0 to 8, t is 1 to 8 and $2 \leq s+t \leq 8$, $X^1$ is an alkoxy group or an N-succinimidyloxycarbonyl group, and $X^2$ is an N-succinimidyloxycarbonyl group; when a, b, $OA^1$, $OA^2$, p, q, $L^1$, $L^2$, and $X^1$ are respectively present in plurality in one molecule, the plural members of each are the same or different.

[Advantageous Effects of Invention]

The present invention makes it possible to provide a polyoxyethylene derivative containing a small amount of the compound of the formula (1) by analyzing the compound of the formula (1) contained in the polyoxyethylene derivative with high sensitivity. Even in small amounts, the compound of the formula (1) contained in polyoxyethylene derivatives used for modification of biologically related substances can cause production of impurities during production of pharmaceutical products. Therefore, the present invention is extremely useful in the quality control of pharmaceutical products.

[Description of Embodiments]

The present invention is described in detail below.

As a method for detecting low-molecular-weight compounds with high sensitivity, ultraviolet visible spectrometer detector, fluorescence detector, mass spectrometry detector, and the like can be generally mentioned. However, fluorescence detectors can only detect compounds that exhibit fluorescence. Therefore, the compound of the formula (1) cannot be detected. Mass spectrometry detectors are very expensive and have many limitations, for example, non-volatile eluents cannot be used and the detector is contaminated when high concentration samples are measured. On the other hand, ultraviolet visible spectrometer detectors are inexpensive, and can use many eluents regardless of whether they are volatile or non-volatile, and the detector is not contaminated with high concentration samples. Therefore, they are widely used as highly versatile detectors, and it is preferable to use an ultraviolet visible spectrometer detector as the detector also in the analysis method of the present invention. As the wavelength used for detection (detection wavelength), ultraviolet light having a wavelength shorter than 200 nm, preferably ultraviolet light having a wavelength of 190 to 200 nm, and particularly preferably ultraviolet light having a wavelength of 194 nm, is used.

The separation mode used in the analysis method of the present invention is preferably reversed-phase chromatography. Reversed-phase chromatography using a column packed with silica-based particles modified with octadecyl group (C18), octyl group (C8), phenyl group (Ph), or triacontyl group (C30), or similarly modified polymer-based particles is more preferred, and reversed-phase chromatography using a column packed with silica-based particles modified with octadecyl group is particularly preferred. The column used for analysis may be made of stainless steel and have a column length of 5 to 25 cm and an inner diameter of 1 to 6 mm, preferably a column length of 15 to 25 cm and an inner diameter of 2 to 5 mm. The particle size of the filler is preferably 2 to 10 μm, particularly preferably 2 to 5 μm. The filler is preferably wholly porous particles or superficially porous particles, and the pore size is preferably 5 to 50 nm, particularly preferably 7 to 30 nm. The column temperature is preferably 5 to 60°C, particularly preferably 20 to 40°C. As the eluent (mobile phase for analysis) used in the analysis, a mixture of water and an organic solvent can be used. As for the kind of organic solvent, water-miscible polar solvents such as acetonitrile, methanol, and 2-propanol can be used, and acetonitrile is preferably used. The mixing ratio of the organic solvent can be in the range of 10 to 80% by volume, preferably in the range of 20 to 50%. Furthermore, water and the organic solvent can be mixed in advance or can be mixed continuously by gradient analysis, and it is particularly preferable to use an eluent mixed in advance. It is known that the compound of the formula (1) reacts with water under neutral to basic conditions and decomposes. Thus, the eluent needs to be under acidic conditions. Additives can be added to the eluent, and 0.01 to 1% of an acidic substance or a salt thereof is preferably added. When the molar absorption coefficient of an acidic substance to be added for ultraviolet light with a wavelength of 190 to 200 nm is large, the baseline of the chromatogram and the peak of the compound of the formula (1) may overlap, which causes a decrease in peak detection sensitivity and analysis reproducibility. Furthermore, from the aspect of suppression of the decomposition of the compound of the formula (1), pKa is preferably not more than 4. An acidic substance to be added is preferably an acidic substance with a maximum molar absorption coefficient of not more than 20 $M^{-1}cm^{-1}$ in ultraviolet ray with a wavelength of 190 to 200 nm and a pKa of not more than 4, more preferably a maximum molar absorption coefficient of not more than 5 $M^{-1}cm^{-1}$ and a pKa of not more than 3. It is further preferable to use phosphoric acid and perchloric acid, and phosphoric acid is most preferred. The rate at which the eluent is fed is preferably 0.1 to 4 mL/min, particularly preferably 0.2 to 1.5 mL/min.

The analysis sample of the present invention is a polyoxyethylene derivative containing the compound of the formula (1). In a preparation method of this analysis specimen sample, since the compound of the formula (1) reacts with water and decomposes as described above, the polyoxyethylene derivative is dissolved using an aprotic organic solvent and preferably dissolved in a solvent that is miscible with the eluent used for the analysis. Generally in liquid chromatography, a ghost peak that interferes with analysis may appear when an eluent and a liquid for dissolution of the analysis sample are different. Thus, it is preferable to use the organic solvent used as the eluent. Furthermore, in order to suppress hydrolysis of the compound of the formula (1), an acidic substance can be added as an additive to a liquid for dissolution of an analysis sample. As the acidic substance, acetic acid, formic acid, or trifluoroacetic acid (hereinafter also to be referred to as TFA) is preferably used, and trifluoroacetic acid is particularly preferably used.

By increasing the concentration of the polyoxyethylene derivative when dissolved in a liquid for dissolution, the concentration of the compound of the formula (1) contained also increases. As a result, the analysis sensitivity is improved but it is known that peak separation deteriorates if the concentration is too high. Therefore, the concentration of the polyoxyethylene derivative is preferably 50 to 300 mg/mL, particularly preferably 50 to 200 mg/mL. By increasing the amount of sample injection during analysis, the amounts of polyoxyethylene derivative introduced into the column and the compound of the formula (1) contained increase. As a result, the analysis sensitivity is improved but it is known that when the analysis sample of the present invention is dissolved using an aprotic organic solvent, peak separation deteriorates by increasing the amount of sample injection. Furthermore, when the amount of sample injection is small, the reproducibility of the injection amount becomes poor, and the reproducibility of the analysis results also becomes poor. Therefore, the sample injection amount (volume) during analysis is preferably not less than 0.2% and not more than 0.5%, particularly preferably not less than 0.2% and not more than 0.3%, of the column volume.

When the sample concentration used for analysis is C (mg/mL), the sample injection amount is I (mL), and the column volume is V (mL), the sample amount per column volume is expressed as "CxI÷V". When it is small, the sensitivity becomes poor, and when it is large, the peak separation becomes poor. Therefore, it is preferably not less than 0.1 and not more than 1.5, particularly preferably not less than 0.1 and not more than 1.6.

The signal/noise ratio (S/N ratio) can be recited as a measure of the detection sensitivity of the analysis method of the present invention. When a polyoxyethylene derivative containing the compound of the formula (1) equivalent to 5 ppm is analyzed, the S/N ratio of the peak derived from the compound of the formula (1) is preferably not less than 10, more preferably not less than 30.

In the definition of the formula (2), a and b are the average number of added moles of oxyethylene groups, each 0 to 5000, preferably 0 to 1000, and a+b is not less than 20.

Examples of the compound having 2 to 8 hydroxyl groups and 2 to 21 carbon atoms and optionally containing an oxygen atom and/or a nitrogen atom in the definition of Z in the formula (2) include ethylene glycol, triethanolamine, glycerin, diglycerin, tetrakis(2-hydroxyethyl)ethylenediamine, xylitol, pentaerythritol, dipentaerythritol, tripentaerythritol,

hexaglycerine, and the like, preferably ethylene glycol, glycerine, and pentaerythritol, more preferably ethylene glycol.

Examples of the alkylene group in the definitions of $L^1$ and $L^2$ in the formula (2) include a linear or branched alkylene group having 1 to 6 carbon atoms, preferably methylene group, ethylene group, propylene group, butylene group, and pentylene group, more preferably methylene group, ethylene group, and pentylene group.

Examples of the alkoxy group in the definition of $X^1$ in the formula (2) include a linear or branched alkylene group having 1 to 6 carbon atoms. A methoxy group, an ethoxy group, a propoxy group, or an isopropyloxy group is preferred, and a methoxy group is more preferred. $X^2$ is an N-succinimidyloxycarbonyl group.

In the following formula (3), which is one of the preferred embodiments of the polyoxyethylene derivative of the formula (2), Z in the formula (2) is an ethylene glycol residue.

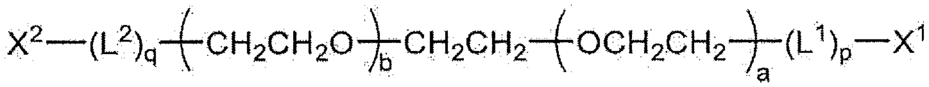

(3)

In the following formula (4), which is one of the preferred embodiments of the polyoxyethylene derivative of the formula (2), Z in the formula (2) is a glycerin residue.

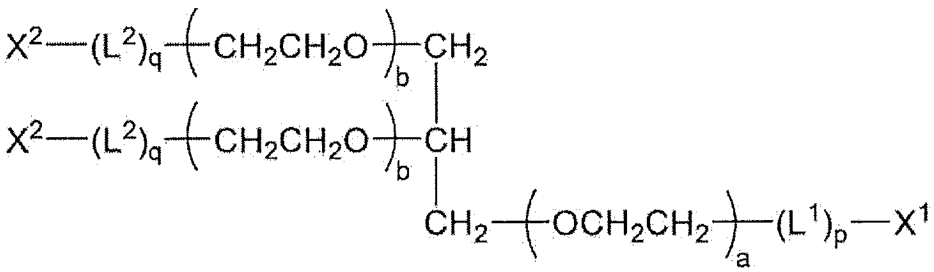

(4)

In the following formula (5), which is one of the preferred embodiments of the polyoxyethylene derivative of the formula (2), Z in the formula (2) is a xylitol residue.

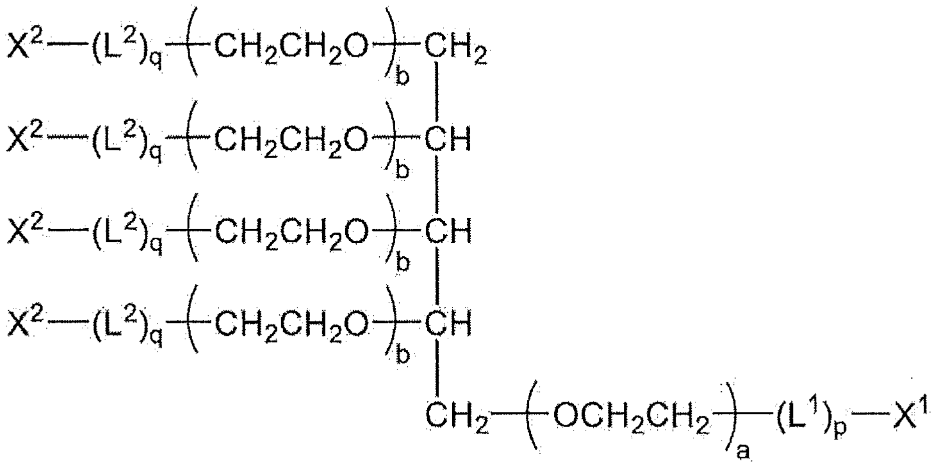

(5)

In the following formula (6), which is one of the preferred embodiments of the polyoxyethylene derivative of the formula (2), Z in the formula (2) is a pentaerythritol residue.

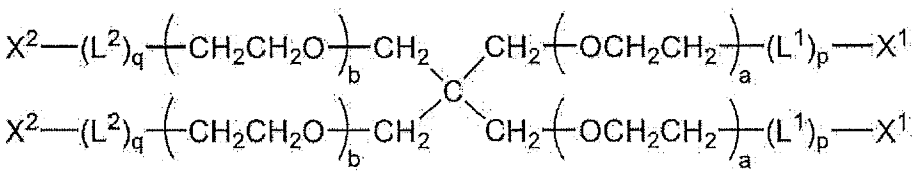

(6)

In the following formula (7), which is one of the preferred embodiments of the polyoxyethylene derivative of the formula (2), Z in the formula (2) is a hexaglycerin residue.

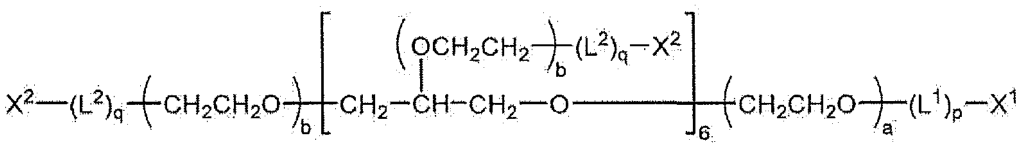

(7)

$L^1$ and $L^2$ in the formula (2) are each independently a divalent spacer. These spacers are not particularly limited as long as they are groups that can form a covalent bond. Preferably, each is an ester bond, an amide bond, an ether bond, a thioether bond, a urethane bond, a urea bond, or an alkylene group optionally containing these bonds, and more preferably an ester bond, an amide bond, an ether bond, a urethane bond, or an alkylene group optionally containing these bonds. Particularly preferred embodiments are those shown in the following group (I). In addition, two to five spacers of group (I) may be combined.

Group (I)

$$-(CH_2)_r-$$

(z1)

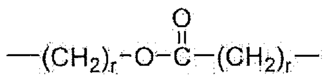

(z2)

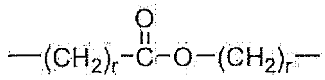

(z3)

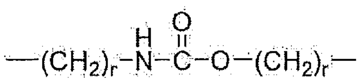

(z4)

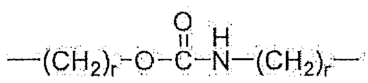

(z5)

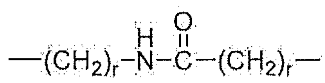

(z6)

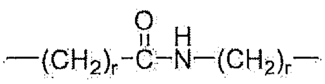

(z7)

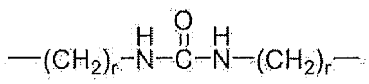

(z8)

$$-(CH_2)_r-O-(CH_2)_r-$$

(z9)

$$-(CH_2)_r-S-(CH_2)_r-$$

(z10)

In (z1) to (z10), r in the formula is an integer of 0 to 10 (however, in (z1), r is not 0), preferably an integer of 0 to 6, further preferably an integer of 0 to 5. In (z2) to (z10), each r in the formula may be the same or different.

$L^1$ in the formula (2) is preferably (z1), (z2), (z3), (z4), (z5), (z6), (z7), (z8), (z9), or (z10) of group (I), and (z1), (z2), (z6), and (z9) are more preferred.

$L^2$ in the formula (2) is preferably (z2), (z3), (z4), (z5), (z6), (z7), (z8), (z9), or (z10) of group (I), and (z2), (z6), and (z9) are more preferred.

p in the formula (2) is preferably 0.

Variation example

The present invention is not limited to the constitution described in the above-mentioned embodiments, but also includes, for example, the following constitution.

For example, the skeleton of the compound of the formula (4) may be made into the skeleton of the formula (11) below, or the skeleton of the compound of the formula (5) may be made into the skeleton of the formula (12) below. These compounds of the formula (11) and the formula (12) can also provide the same effects as those of the above-mentioned embodiments.

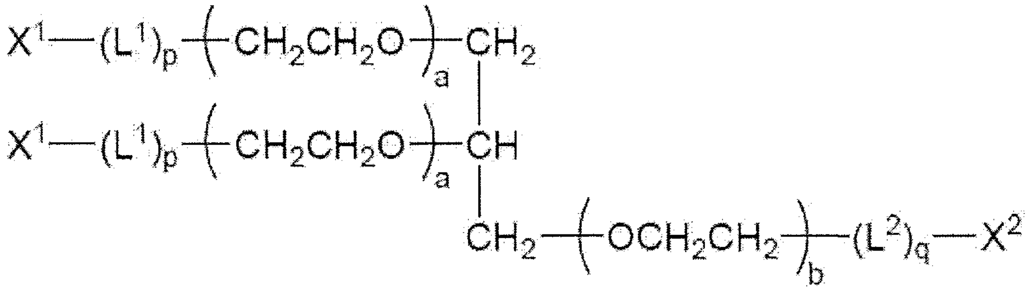

(11)

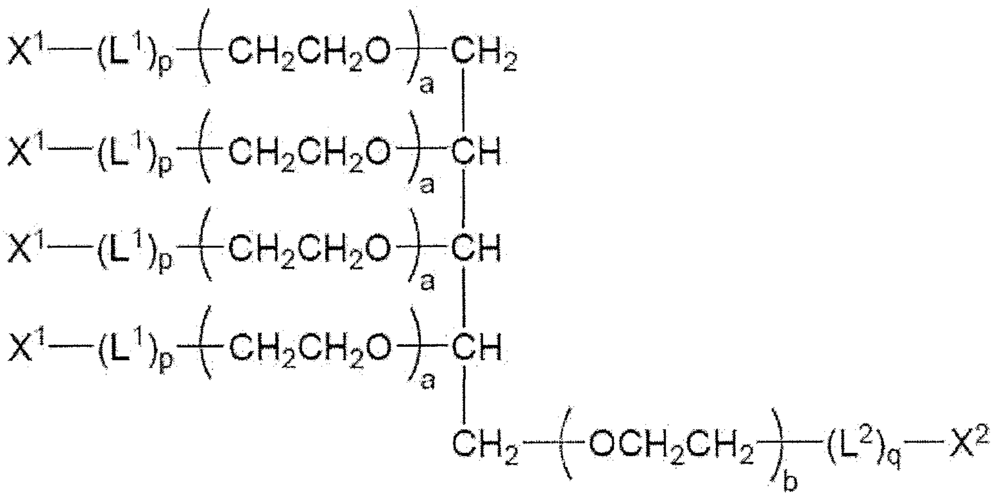

(12)

[Example]

The present invention is described in more detail by means of Examples and Comparative Examples. The present invention is not limited to the following examples.

(Example 1)

The compound of the formula (1) (β-Ala-NHS) (10.0 mg) was weighed into a 50 mL volumetric flask, and dissolved in acetonitrile, and then the volume was increased (0.2 mg/mL). This solution (0.5 mL) was accurately weighed into a 100 mL volumetric flask, and the volume was increased with 0.1% TFA-containing acetonitrile solution to prepare an addition solution (0.001 mg/mL). Then, 100 mg of the compound of the formula (8) (NOF CORPORATION, SUNBRIGHT ME-200HS)

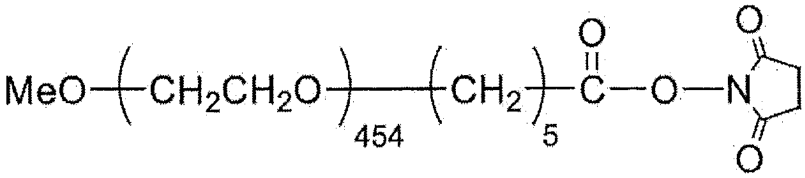

(8)

was weighed into a 1 mL volumetric flask, and 0.5 mL of the addition solution was accurately weighed and added thereto, and the volume was increased with 0.1% TFA-containing acetonitrile to prepare an analysis sample solution (100 mg/mL, 5 ppm of β-Ala-NHS was added to the compound of the formula (8)). HPLC measurement of the analysis sample solution was performed under the following conditions. The peak height of β-Ala-NHS in the analysis sample at this time was 2325, and the S/N ratio was 56.

In Example 1, the sample concentration C (mg/mL) was 100 mg/mL, the sample injection amount I (mL) was 0.01 mL, and the column volume V (mL) was 4.15 mL, and therefore,

$$C \times I \div V = 100 \times 0.01 \div 4.15 = 0.24.$$

(HPLC measurement conditions)

HPLC apparatus: Alliance2695 (Nihon Waters K.K.)
column: Inetsil ODS-3 (inner diameter 4.6 mm, length 250 mm, particle size 5 μm)
flow rate: 1.0 mL/min
analysis time: 20 min
column temperature: 40°C
eluent: water/acetonitrile=7/3, containing 0.02% phosphoric acid
injection amount: 10 μL
detector: ultraviolet visible spectrometer detector (194 nm) (Nihon Waters K.K.)

(Comparative Example 1)

HPLC was measured using the analysis sample solution of Example 1, changing the additive for HPLC eluent from 0.02% phosphoric acid (maximum molar absorption coefficient ε=1.2 $M^{-1}cm^{-1}$ (190 to 200 nm), pKa=2.1) to 0.1% acetic acid (maximum molar absorption coefficient ε=38 $M^{-1}cm^{-1}$ (190 to 200 nm), pKa=4.8), and under the same conditions as in Example 1 except the additive. The peak height of β-Ala-NHS in the analysis sample at this time was 769, and the S/N ratio was 2.

(Comparative Example 2)

HPLC was measured using the analysis sample solution of Example 1, changing the additive for HPLC eluent from 0.02% phosphoric acid (maximum molar absorption coefficient ε=1.2 $M^{-1}cm^{-1}$ (190 to 200 nm), pKa=2.1) to 0.1% TFA (maximum molar absorption coefficient ε=216 $M^{-1}cm^{-1}$ (190 to 200 nm), pKa=0.5), and under the same conditions as in Example 1 except the additive. The peak height of β-Ala-NHS in the analysis sample at this time was 540, and the S/N ratio was 2.

(Example 2)

HPLC was measured by changing the amount of compound of the formula (8) to be measured when preparing the analysis sample solution from 100 mg to 30 mg, changing the concentration of the sample to be prepared from 100 mg/mL (5 ppm of β-Ala-NHS was added to the compound of the formula (8)) to 30 mg/mL (5 ppm of β-Ala-NHS was added to the compound of the formula (8)), through changing the amount of the addition solution from 0.5 mL to 0.15 mL, and under the same conditions as in Example 1. The peak height of β-Ala-NHS in the analysis sample at this time was 698, and the S/N ratio was 11.

In Example 2, the sample concentration C (mg/mL) was 30 mg/mL, the sample injection amount I (mL) was 0.01 mL, and the column volume V (mL) was 4.15 mL, and therefore,

$$C \times I \div V = 30 \times 0.01 \div 4.15 = 0.07.$$

[Table 1]

| | peak height | S/N ratio |
|---|---|---|
| Example 1 | 2325 | 56 |
| Example 2 | 698 | 11 |
| Comparative Example 1 | 769 | 2 |
| Comparative Example 2 | 540 | 2 |

(Example 3)

The compound (8) of Example 1 was changed to the compound of the formula (9)

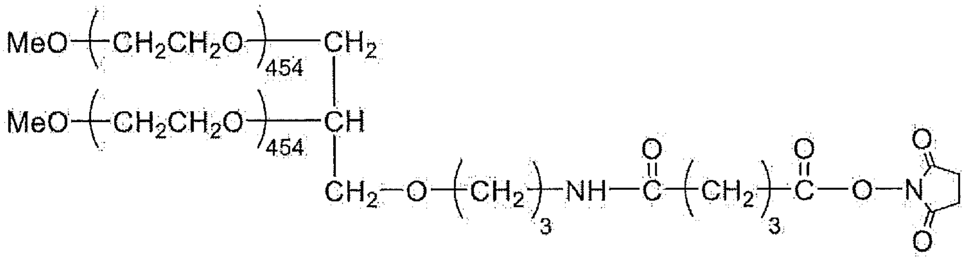

(9)

and HPLC was measured. The peak height of β-Ala-NHS in the sample at this time was 2520, and the S/N ratio was 57.

(Example 4)

The compound (8) of Example 1 was changed to the compound of the formula (10)

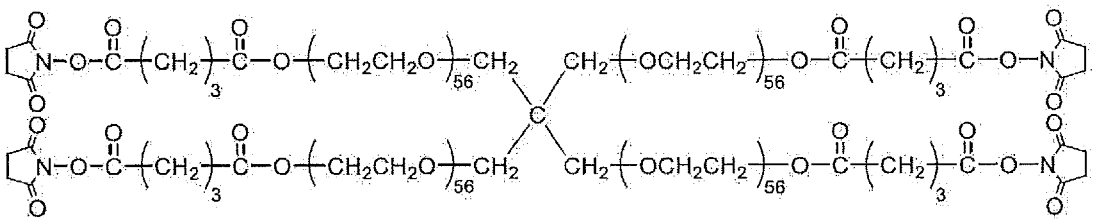

(10)

and HPLC was measured. The peak height of β-Ala-NHS in the sample at this time was 2210, and the S/N ratio was 54.

[Industrial Applicability]

According to the present invention, a highly sensitive analysis method for a low-molecular-weight compound contained in a polyoxyethylene derivative is provided.

This application is based on a patent application No. 2021-115693 filed in Japan (filing date: July 13, 2021).

## Claims

1. An analysis method comprising separating a compound of the formula (1):

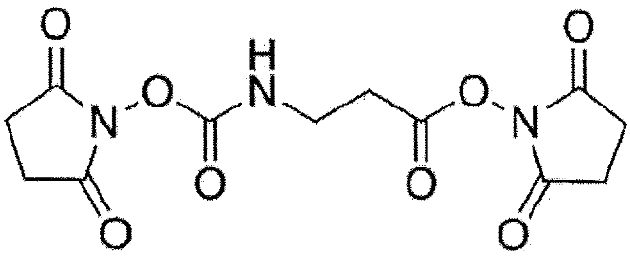

(1)

contained in a polyoxyethylene derivative by reversed-phase chromatography, and detecting the compound with an ultraviolet visible spectrometer detector, wherein ultraviolet light with a wavelength shorter than 200 nm as the detection wavelength is used, and an acidic substance with a maximum molar absorption coefficient of not more than 20 $M^{-1}cm^{-1}$ at 190 to 200 nm and a pKa of not more than 4 is used as an additive to the mobile phase for the analysis.

2. The analysis method according to claim 1, wherein the polyoxyethylene derivative is represented by the formula (2)

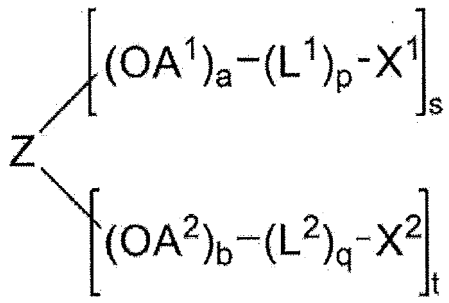

(2)

wherein Z is a residue of a compound having 2 to 8 hydroxyl groups and 2 to 21 carbon atoms and optionally containing an oxygen atom and/or a nitrogen atom, $OA^1$ and $OA^2$ are oxyethylene groups, a and b are each independently 0 to 5,000 and a+b is not less than 20, $L^1$ and $L^2$ are each independently an alkylene group optionally having a bond selected from an ester bond, an urethane bond, an amide bond, a urea bond, an ether bond, and a thioether bond in an alkylene chain or at an end, p and q are each independently 0 or 1, s is 0 to 8, t is 1 to 8 and $2 \leq s+t \leq 8$, $X^1$ is an alkoxy group or an N-succinimidyloxycarbonyl group, and $X^2$ is an N-succinimidyloxycarbonyl group; when a, b, $OA^1$, $OA^2$, p, q, $L^1$, $L^2$, and $X^1$ are respectively present in plurality in one molecule, the plural members of each are the same or different.

## Patentansprüche

1. Analyseverfahren, umfassend das Abtrennen einer Verbindung der Formel (1):

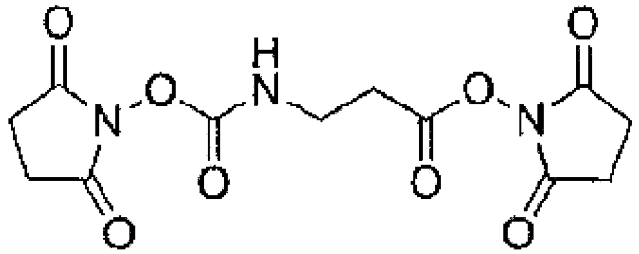

(1)

die in einem Polyoxyethylen-Derivat enthalten ist, durch Umkehrphasenchromatographie, und Nachweisen der Verbindung mit einem UV-Vis-Spektrometer-Detektor, wobei ultraviolettes Licht mit einer Wellenlänge von weniger als 200 nm als Nachweiswellenlänge verwendet wird und eine saure Substanz mit einem maximalen molaren Absorptionskoeffizienten von nicht mehr als 20 $M^{-1}cm^{-1}$ bei 190 bis 200 nm und einem pKa-Wert von nicht mehr als 4 als Additiv zur mobilen Phase für die Analyse verwendet wird.

2. Analyseverfahren nach Anspruch 1, wobei das Polyoxyethylen-Derivat durch die Formel (2) dargestellt ist:

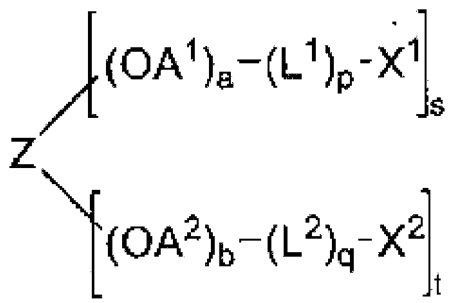

(2)

wobei Z ein Rest einer Verbindung mit 2 bis 8 Hydroxylgruppen und 2 bis 21 Kohlenstoffatomen ist und gegebenenfalls ein Sauerstoffatom und/oder ein Stickstoffatom enthält, $OA^1$ und $OA^2$ Oxyethylen-Gruppen sind, a und b jeweils unabhängig voneinander 0 bis 5.000 sind und a+b nicht weniger als 20 ist, $L^1$ und $L^2$ jeweils unabhängig voneinander eine Alkylen-Gruppe sind, die gegebenenfalls eine Bindung aufweist, die ausgewählt ist aus einer Ester-Bindung, einer Urethan-Bindung, einer Amid-Bindung, einer Harnstoff-Bindung, einer Ether-Bindung und einer Thioether-Bindung in einer Alkylenkette oder an einem Ende, p und q jeweils unabhängig voneinander 0 oder 1 sind, s 0 bis 8 ist, t 1 bis 8 ist und $2 \leq s+t \leq 8$ ist, $X^1$ eine Alkoxy-Gruppe oder eine N-Succinimidyloxycarbonyl-Gruppe ist und $X^2$ eine N-Succinimidyloxycarbonyl-Gruppe ist;
wobei, wenn a, b, $OA^1$, $OA^2$, p, q, $L^1$, $L^2$ und $X^1$ jeweils mehrfach in einem Molekül vorhanden sind, die mehreren Mitglieder jeweils gleich oder unterschiedlich sind.

## Revendications

1. Procédé d'analyse comprenant la séparation d'un composé de formule (1) :

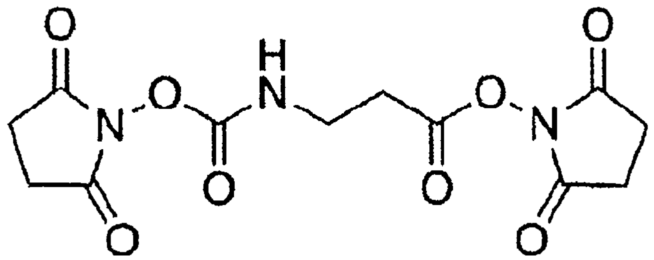

(1)

contenu dans un dérivé de polyoxyéthylène par chromatographie en phase inverse et la détection du composé avec un détecteur spectromètre ultraviolet-visible, où la lumière ultraviolette ayant une longueur d'onde inférieure à 200 nm en tant que longueur d'onde de détection est utilisée, et une substance acide ayant un coefficient d'absorption molaire maximale inférieur à 20 $M^{-1}cm^{-1}$ à 190 à 200 nm et un pKa inférieur à 4 est utilisée comme additif à la phase mobile pour l'analyse.

2. Procédé d'analyse selon la revendication 1, dans lequel le dérivé de polyoxyéthylène est représenté par la formule (2)

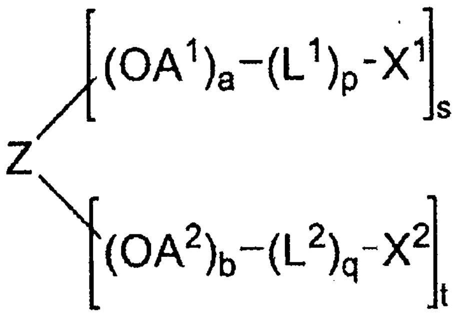

(2)

dans laquelle Z est un résidu d'un composé ayant 2 à 8 groupes hydroxyle et 2 à 21 atomes de carbone et contenant éventuellement un atome d'oxygène et/ou un atome d'azote, $OA^1$ et $OA^2$ sont des groupes oxyéthylène, a et b sont chacun indépendamment 0 à 5000 et a + b n'est pas inférieur à 20, $L^1$ et $L^2$ sont chacun indépendamment un groupe alkylène ayant éventuellement une liaison choisie parmi une liaison ester, une liaison uréthane, une liaison amide, une liaison urée, une liaison éther, et une liaison thioéther dans une chaîne alkylène ou à une extrémité, p et q sont chacun indépendamment 0 ou 1, s est 0 à 8, t est 1 à 8, et $2 \leq s + t \leq 8$, $X^1$ est un groupe alcoxy ou un groupe N-succinimidyloxycarbonyle, et $X^2$ est un groupe N-succinimidyloxycarbonyle ; lorsque a, b, $OA^1$, $OA^2$, p, q, $L^1$, $L^2$ et $X^1$ sont respectivement présents en pluralité dans une molécule, les éléments multiples sont chacun identiques ou différents.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010107520 A
- WO 1997003106 A
- JP 2021115693 A


### Non-patent literature cited in the description


- *CHEMICAL ABSTRACTS*, 21994-89-8
- Bioconjugate Techniques. 2013
- *Tetrahedron*, 1968, vol. 24, 6935-6939
- *Reactive & Functional Polymers*, 2007, vol. 67, 529-539